# FASCICULE DE BREVET EUROPEEN

(11) **EP 2 576 229 B1**
(45) Date de publication et mention de la délivrance du brevet: **31.10.2018**
(21) Numéro de dépôt: 11728313.5
(22) Date de dépôt: 27.05.2011
(51) Int. Cl.: B41M 3/00, G02B 3/00, B41M 3/16, B41M 7/00, B41M 5/00

(54) **FABRICATION DE STRUCTURES EN RELIEF PAR PROCÉDÉS D'IMPRESSION**
HERSTELLUNG VON GEPRÄGTEN STRUKTUREN ANHAND EINES DRUCKVERFAHRENS
MANUFACTURE OF EMBOSSED STRUCTURES BY PRINTING PROCESSES

(30) Priorité: 03.06.2010 FR 1002340
(43) Date de publication de la demande: 10.04.2013
(73) Titulaire: Guigan, Pierre, 92100 Boulogne Billancourt (FR)
(72) Inventeur: Guigan, Pierre, 92100 Boulogne Billancourt (FR)
(74) Mandataire: IP Trust
(86) Numéro de dépôt international: PCT/FR2011/000315
(87) Numéro de publication internationale: WO 2011/151536

(56) Documents cités:
- EP-A1- 0 722 098
- EP-A1- 1 211 095
- EP-A2- 1 310 377
- US-A1- 2006 262 410
- US-B1- 6 297 911

## Description

### Domaine technique

La présente invention concerne la fabrication de structures en relief comme par exemple des lentilles convexes de tous types, cylindriques ou sphériques, à pupilles circulaires, hexagonales ou carrées, des fibres optiques, des guides d'ondes, des coupleurs, des mélangeurs et des interrupteurs placés sur toutes sortes de substrats pour créer des circuits optiques et optoélectroniques.

Elle met en oeuvre des techniques d'impression connues et bon marché comme l'offset, l'héliographie, la flexographie, la sérigraphie, la tampographie et le jet d'encre par exemple.

Le problème à résoudre est de bien séparer des structures imprimées voisines, et de ne pas avoir à repérer trop finement l'impression de plusieurs couches successives.

### Technique antérieure

On connaît plusieurs documents qui concernent l'une des principales applications de la présente invention, la fabrication de lentilles optiques, dont en particulier les suivants.
- US 7,609,451 Joel Scott Scarbrough [US] Printed article for displaying images having improved definition and depth (27/10/2009),
- WO 9509372 (A1) Yoshihide Yumoto [JP] Procédé de fabrication de lentilles, procédé de fabrication d'un article avec lentille, article avec lentille et composition de résine formant séparation (publié le 06/04/1995),
- et PCT/FR/2009/050883 Franck Guigan [FR] Eléments optiques imprimés (13 mai 2009)

Certaines de ces techniques permettent effectivement de réaliser des structures en relief par impression.

La présente invention permet de réaliser des structures en relief très proches les unes des autres, voire contigües, en plusieurs couches successives, sans avoir à repérer la seconde couche avec une très grande précision.

### Exposé de l'invention

La présente invention est un procédé d'impression consistant successivement :
- à déposer sur un sous-ensemble dit « surface S1 », d'une surface à imprimer dite surface S0, un matériau liquide ou poudreux M1,
- à durcir par un moyen connu ledit matériau M1,
- à déposer sur tout ou partie de ladite surface S0 un matériau liquide M2 qui a, à l'état liquide, une tension superficielle supérieure à celle qu'a ladite surface S1 ainsi solidifiée,
- et à durcir par un moyen connu ledit matériau M2,
caractérisé par le fait qu'on fait baisser la tension superficielle dudit matériau M1 entre le dépôt des deux couches de matériau M1 et M2, de telle sorte que ledit matériau M1 ait :
- avant durcissement une tension superficielle supérieure à celle du support d'impression,
- et après durcissement une tension superficielle inférieure à celle du support d'impression.
étant précisé que l'on entend ci-avant par « durcissement » d'un matériau aussi bien son passage de l'état liquide à l'état solide que son passage de l'état de poudre à celui d'un bloc de matière.

La présente invention est aussi un dispositif obtenu par ce procédé.

### Description sommaire des dessins

L'invention sera bien comprise, et d'autres buts, avantages et caractéristiques de celle-ci apparaîtront plus clairement à la lecture de la description qui va suivre, laquelle est illustrée par les dessins annexés, sur lesquels les figures la à 1f illustrent les étapes successives du procédé.

Toutes ces figures sont des vues en perspective qui montrent un support d'impression 1, des structures à imprimer 111, 121 et suivantes, et un ensemble 2 de surfaces de séparation de structures à imprimer.

### Description détaillée de modes particuliers de réalisation de l'invention

La présente invention utilise une méthode d'impression connue, qui fait appel à la différence entre la tension superficielle du support d'impression et celle de l'encre. Lorsque l'encre a une tension nettement supérieure à celle du support d'impression, elle se rétracte pour occuper la surface minimale. Il en résulte une impression plus précise. Cette méthode est bien connue des imprimeurs.

Yoshihide Yumoto [JP] - dans WO 9509372 (A1) - la met en oeuvre en imprimant dans une première étape des lignes de séparation des structures à imprimer, et ensuite les structures elles mêmes avec une encre qui a une tension superficielle encore supérieure. Il commence en effet par imprimer des lignes de séparation de lentilles et imprime ensuite un à-plat qui est repoussé par ces lignes et se fixe au support. L'encre de cet à-plat est repoussée parce que l'encre utilisée pour l'impression préalable des lignes de séparation de lentilles a une tension superficielle inférieure à celle du support. Ceci est d'ailleurs confirmé par le fait qu'il indique que l'angle recherché entre le support et l'encre servant à imprimer les lignes de séparation de lentilles est « d'au moins 6 degrés ».

Ce document explique que l'angle de contact recherché entre les structures à imprimer (qui pour lui sont des lentilles optiques) et des lignes de séparation de lentilles préalablement imprimées, est « d'au moins 15 degrés ».

EP 1 211 095 A1 et EP 1 310 377 A2 décrivent des procédés d'impression en trois dimensions consistant à déposer sur un support d'impression une encre comportant un additif (hydroxy-modified polyether silane) qui permet à la tension superficielle de l'encre de baisser en séchant, à sécher cette encre (par un moyen quelconque ou par bombardement électronique) jusqu'à ce que sa tension superficielle soit inférieure à celle du support et à déposer une résine dont la tension superficielle propre n'est pas définie. Il est simplement précisé que le parfait écoulement de la résine résulte du fait que la tension superficielle de l'encre séchée est inférieure à celle du support.

L'objectif poursuivi par la présente invention est beaucoup plus ambitieux : réaliser des structures en relief formant avec le support un angle nettement supérieur à 45°. Il faut pour cela non seulement à la fois que le média ne refuse pas le matériau M2, et que le matériau M2 soit très fortement repoussé par le matériau M1 solidifié.

La présente invention a pour originalité de faire baisser la tension superficielle de la première couche, à un point tel qu'elle devienne inférieure - si possible nettement inférieure et la plus basse possible - à la tension superficielle du support d'impression. Cette modification a lieu entre l'impression des deux couches.

L'encre de la seconde couche est ainsi nettement plus repoussée par les lignes de séparation que par le support d'impression lui-même.

Une telle baisse de tension superficielle du matériau M1 est facile à obtenir par l'homme de l'art. Elle peut par exemple être obtenue en ajoutant des composants siliconés au matériau servant à réaliser la première couche. En pratiquant un séchage rapide et fort (par exemple avec un puissant rayon UV), les composants siliconés remontent alors à la surface, en faisant baisser sa tension superficielle. D'autres agents de tension connus permettent d'obtenir cette baisse de tension, qui avec certains d'entre eux est d'autant plus forte que le durcissement est rapide.

A l'issue de ce séchage, la première couche a ainsi une tension superficielle qui - selon la présente invention - devient inférieure à celle du support, et la seconde couche vient naturellement se placer sur l'espace non recouvert de la première couche.

Rien ne s'oppose à ce que l'écart de tensions superficielles entre première couche solidifiée et seconde couche liquide soit très élevé, ce qui permet de faire des protubérances très hautes.

Un augmentation de température peut être provoquée pour obtenir le durcissement du matériau M1, ou peut résulter des réactions chimiques qui s'opèrent lors du durcissement, par exemple lors de l'application d'un rayonnement ultra-violet. Dans le cas où le matériau M1 est un polymère, Il est avantageux de le chauffer d'avantage après son dépôt. En effet, la tension superficielle des polymères baisse avec la température. Ce chauffage supplémentaire aura aussi pour effet de chauffer le support d'impression, mais on peut choisir ce dernier de telle sorte que sa tension superficielle baisse moins avec la hausse de température que celle du matériau M1.

La seconde couche peut être directement superposée à la première, et ne concerner que la partie de la surface S0 qui n'est pas déjà recouverte du matériau M1, mais il peut aussi s'agir d'un simple à-plat déposé sur toute la surface S0, puisque cet à-plat est refusé par la surface S1.

Pour la première couche, on peut utiliser aussi bien de l'encre en poudre que de l'encre liquide, mais le liquide offre l'avantage de réagir fortement à l'écart de tension superficielle entre l'encre et le support d'impression.

La surface S1, objet de l'impression de la première couche avec le matériau M1, peut aussi bien être l'ensemble 2 des surfaces de séparation, que celui des structures à imprimer. Les deux solutions sont possibles.

Lorsque la surface S1 est l'ensemble 2 des surfaces de séparation , la surface S1 peut être constituée de lignes, mais elle peut aussi être constituée de surfaces plus larges que des lignes, afin de pouvoir ensuite multiplier les couches d'impression après le dépôt de M2 tout en continuant à bénéficier de l'avantage qu'il y a à ce que la partie située entre les structures à imprimer repousse le matériau M2..

Les deux techniques permettent de réaliser des réseaux de lentilles optiques et/ou de fibres optiques. Il suffit pour cela que les structures à imprimer soient transparentes à l'état solide.

Les surfaces de séparation des structures à imprimer peuvent aussi être transparentes, mais elles sont avantageusement opaques lorsqu'elles ne sont pas entièrement recouvertes par les structures transparentes.

Le procédé objet de la présente invention peut être mis en oeuvre par l'application de deux couches uniquement, la première sous forme de surfaces précises, et la seconde sous forme d'un à-plat sur les surfaces ayant déjà reçu la première couche.

L'un des avantages de l'invention est que cette seconde couche n'a pas besoin d'être repérée avec une précision très grande, et qu'il est ainsi possible de réaliser des structures en relief très fines, comme par exemple des réseaux de micro-lentilles optiques, tout en utilisant des moyens d'impression à faible repérage.

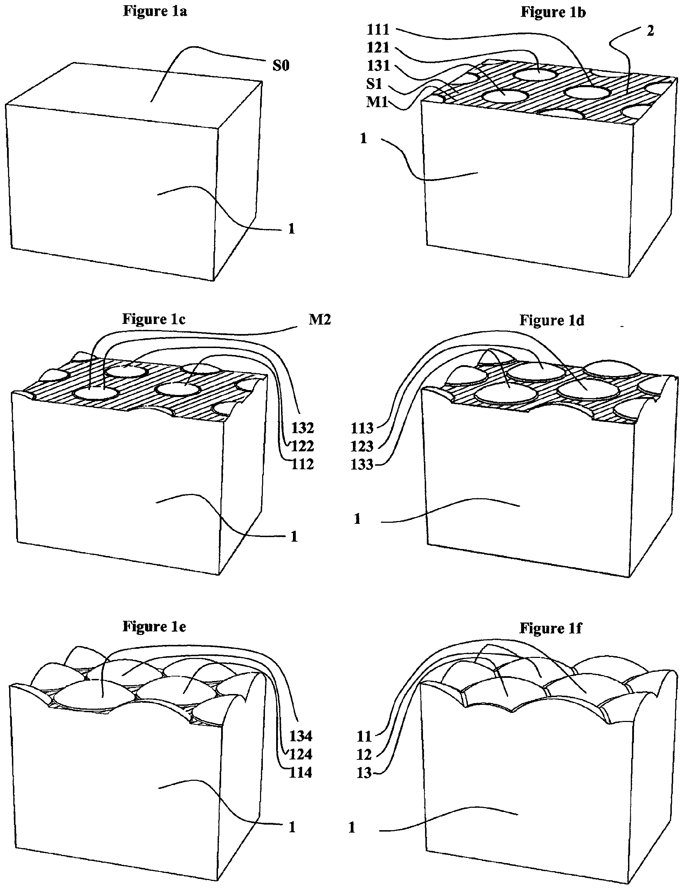

Dans un mode perfectionné, illustré par les figures 1b à 1f, on peut multiplier les à-plats successifs pour faire croître progressivement les structures en relief.

Les applications de la présente invention se situent dans les domaines de l'imprimerie, et en particulier de l'imprimerie d'art ou fantaisie, dans le domaine des réseaux lenticulaires, des circuits optiques, des fibres optiques, des écrans vidéo, des luminaires, des capteurs optiques, de l'optoélectronique, etc.

## Revendications

1. Procédé d'impression de structures en relief (111, 121 et suivantes) sur un support d'impression (1) consistant successivement :
• à déposer sur une surface (S1), constituant un sous-ensemble d'une surface à imprimer (S0) du support d'impression, un matériau liquide ou poudreux (M1) ayant une tension superficielle supérieure à celle du support d'impression,
• à durcir par un moyen connu ledit matériau (M1) jusqu'à faire baisser la tension superficielle dudit matériau (M1) recouvrant ladite surface (S1) constituant un sous-ensemble ainsi solidifié, à une tension superficielle inférieure à celle du support d'impression,
• à déposer sur tout ou partie de ladite surface à imprimer (S0) un matériau liquide (M2) qui a, à l'état liquide, une tension superficielle supérieure à celle qu'a ladite surface (S1) constituant un sous-ensemble ainsi solidifié et inférieure à celle du support d'impression,
• et à durcir par un moyen connu ledit matériau (M2),
étant précisé que l'on entend ci-avant par « durcir » un matériau aussi bien son passage de l'état liquide à l'état solide que son passage de l'état de poudre à celui d'un bloc de matière.

2. Procédé d'impression selon la revendication 1, **caractérisé par le fait que** ledit matériau (M2) est appliqué sous forme d'une couche comprenant un ou plusieurs à-plats.

3. Procédé d'impression selon la revendication 1, **caractérisé par le fait que** ledit matériau (M1) comporte des composants siliconés ou agents de tension et est durci par l'application d'un rayonnement ultra-violet.

4. Procédé d'impression selon la revendication 1, **caractérisé par le fait que** la surface (S1) constituant un sous-ensemble est constituée par l'ensemble de la surface à imprimer (S0) diminuée des surfaces desdites structures en relief (111, 121 et suivantes) à imprimer.

5. Procédé d'impression selon la revendication 1, **caractérisé par le fait que** la surface (S1) constituant un sous-ensemble est constituée par l'ensemble desdites structures en relief (111, 121 et suivantes) à imprimer.

6. Procédé d'impression selon la revendication 1, **caractérisé par le fait que** la surface (S1) constituant un sous-ensemble, à l'emplacement desdites structures en relief (111, 121 et suivantes) à imprimer, est transparent à l'état solide.

7. Procédé d'impression selon la revendication 1, **caractérisé par le fait que** la surface (S1) constituant un sous-ensemble, à l'exception de l'emplacement desdites structures en relief (111, 121 et suivantes) à imprimer, est opaque à l'état solide.

8. Procédé d'impression selon la revendication 1, **caractérisé par le fait que** l'on chauffe le matériau (M1) après son dépôt sur le support d'impression, plus que cela n'est nécessaire pour obtenir son durcissement.

9. Procédé d'impression selon la revendication 1, **caractérisé par le fait que** l'on imprime au moins une couche supplémentaire après le dépôt du matériau (M2).

10. Procédé d'impression selon la revendication 1, **caractérisé par le fait que** lesdites structures en relief forment l'une des structures suivantes : lentilles convexes, cylindriques ou sphériques, à pupilles circulaires, hexagonales ou carrées, fibres optiques, guides d'ondes, coupleurs, mélangeurs ou interrupteurs.

## Patentansprüche

1. Verfahren zum Drucken von Relief-Strukturen (11, 121 und folgende) auf einen Druckträger (1), bestehend aus folgenden Schritten:
- dem Auftragen eines flüssigen oder pulverförmigen Materials (M1) mit einer Oberflächenspannung größer der des Druckträgers auf eine Fläche (S1), welche ein Teilbereich einer Druckfläche (S0) des Druckträgers ist,
- dem Härten des besagten Materials (M1) durch ein bekanntes Mittel, bis die Oberflächenspannung des besagten Materials (M1), welches die besagte Fläche (S1) bzw. den auf diese Weise verfestigten Teilbereich bedeckt, auf eine Oberflächenspannung kleiner der Oberflächenspannung des Druckträgers gesenkt wird.
- dem Auftragen eines flüssigen Materials (M2) auf einen Teil der Druckfläche oder die gesamte Druckfläche (S0), wobei dieses im flüssigen Zustand eine Oberflächenspannung größer der Oberflächenspannung der besagten Fläche (S1) bzw. des auf diese Weise verfestigten Teilbereichs und kleiner der des Druckträger hat,
- dem Härten des besagten Materials (M2) durch ein bekanntes Mittel,
wobei darauf hingewiesen wird, dass man unter obengenanntem "Härten" eines Materials dessen Übergang sowohl vom flüssigen in den festen Zustand als auch vom pulverförmigen Zustand in den Zustand eines festen Materialblocks versteht.

2. Druckverfahren nach Anspruch 1, **dadurch gekennzeichnet, dass** besagtes Material (M2) in Form einer Schicht mit einer oder mehreren Vollflächen aufgetragen wird.

3. Druckverfahren nach Anspruch 1, **dadurch gekennzeichnet, dass** besagtes Material (M1) Silikonbestandteile oder Oberflächenspannungsmittel enthält und durch Einwirkung von Ultraviolettstrahlung gehärtet wird.

4. Druckverfahren nach Anspruch 1, **dadurch gekennzeichnet, dass** besagte Fläche (S1), welche einen Teilbereich bildet, aus der gesamten Druckfläche (S0) abzüglich der besagten zu druckenden Reliefstrukturen (111, 121 und folgende) besteht.

5. Druckverfahren nach Anspruch 1, **dadurch gekennzeichnet, dass** die einen Teilbereich bildende Fläche (S1) aus allen zu druckenden Reliefstrukturen (111, 121 und folgende) besteht.

6. Druckverfahren nach Anspruch 1, **dadurch gekennzeichnet, dass** die einen Teilbereich bildende Fläche (S1) an der Stelle der besagten zu druckenden Reliefstrukturen (11, 121 ff.) im festen Zustand durchsichtig ist.

7. Druckverfahren nach Anspruch 1, **dadurch gekennzeichnet, dass** die einen Teilbereich bildende Fläche (S1) mit Ausnahme der Stelle der besagten zu druckenden Reliefstrukturen (111, 121 und folgende) im festen Zustand opak ist.

8. Druckverfahren nach Anspruch 1, **dadurch gekennzeichnet, dass** man das Material (M1) nach dessen Auftrag auf den Druckträger erhitzt, um dessen Härtung zu erzielen.

9. Druckverfahren nach Anspruch 1, **dadurch gekennzeichnet, dass** man nach dem Auftragen des Materials (M2) mindestens eine weitere Schicht druckt.

10. Druckverfahren nach Anspruch 1, **dadurch gekennzeichnet, dass** besagte Relief-Strukturen eine der folgenden Strukturen bilden: konvexe, zylindrische oder sphärische Linsen, mit runden, sechseckigen oder quadratischen Pupillen, optische Fasern, Wellenleiter, Koppler, Mischer oder Schalter.

## Claims

1. A method for printing embossed structures (111, 121, et *seq*.) onto a printing substrate (1) which consists in successively :
• depositing onto a surface (S1), which makes up a sub-assembly of a surface to be printed (S0), a liquid or powder material (M1) having a surface tension higher than that of the printing substrate,
• curing, using known means, said material (M1) until the surface tension of said material (M1) covering said surface (S1) which makes up a thus solidified sub-assembly, goes down to a surface tension lower than that of the printing substrate,
• depositing, on the whole or a part of said surface to be printed (S0), a liquid material (M2) which has, in the liquid state, a surface tension higher than that of said surface (S1) which makes up a thus solidified sub-assembly and lower than that of the printing substrate,
• and curing, using known means, said material (M2), it being specified that "curing" a material, as mentioned above, means the passage thereof from the liquid state to the solid state as well as the passage thereof from the powder state to the state of a block of material.

2. A printing method according to claim 1, **characterized in that** said material (M2) is applied as a layer comprising one or more ground-tint block(s).

3. A printing method according to claim 1, **characterized in that** said material (Ml) includes silicone components or tensioning agents and is cured by applying an ultra-violet radiation.

4. A printing method according to claim 1, **characterized in that** the surface (S1) which makes up a sub-assembly consists of the whole surface to be printed (S0), less the surfaces of said embossed structures (111, 121, et *seq*.) to be printed.

5. A printing method according to claim 1, **characterized in that** the surface (S1) which makes up a sub-assembly consists of all said embossed structures (111, 121, et *seq.*) to be printed.

6. A printing method according to claim 1, **characterized in that** the surface (S1) which makes up a sub-assembly, at the location of said embossed structures (111, 121, et *seq*.) to be printed is transparent in the solid state.

7. A printing method according to claim 1, **characterized in that** the surface (S1) which makes up a sub-assembly, except for the location of said embossed structures (111, 121, et *seq.*) to be printed is opaque in the solid state.

8. A printing method according to claim 1, **characterized in that** the material (Ml) is heated after being deposited onto the printing substrate, more than is necessary to achieve curing thereof.

9. A printing method according to claim 1, **characterized in that** at least one additional layer is printed after the material (M2) has been deposited.

10. A printing method according to claim 1, **characterized in that** said embossed structures form one of the following structures: convex, cylindrical or spherical lenses, lenses with circular, hexagonal or square pupils, optical fibers, waveguides, couplers, mixers or switches.
